# EUROPEAN PATENT APPLICATION

(11) **EP 0 861 810 A2**
(43) Date of publication of application: **02.09.1998**
(21) Application number: 98103003.4
(22) Date of filing: 20.02.1998
(51) Int. Cl.: C02F 9/00, C02F 1/72, C02F 1/74, C02F 1/78, C02F 1/46

(54) **Process for the treatment of liquid residues from photographic processes**

(30) Priority: 28.02.1997 DE 19708296
(71) Applicant: EASTMAN KODAK COMPANY, Rochester, New York 14650 (US)
(72) Inventor: Betz, Gerd, Dr., 73733 Aichwald (DE)
(74) Representative: Lewandowsky, Klaus, Dipl.-Ing.

(57) **Abstract**

Decribed are a process for the treatment of liquid residues from photographic processes, in which the residues are, where necessary after dilution, oxidized in stages with oxygen and ozone and where precipitated solids are, after pH value setting and the addition of auxiliary substances, separated by filtration from the oxidized residues, and a process for performing this process. In the new process, the residues to be treated are subjected to the following process stages:
(a) oxygen oxidization,
(b) oxygen-supported mild anodic oxidization and
(c) a further complete anodic oxidization with current intensities higher than in (b),
(d) in a manner known per se to an ozone treatment and in stage
(e) the precipitated solids are separated in a manner known per se.

## Description

The invention relates to a process and a device for the treatment of liquid residues from photographic processes that for legal reasons may not be poured into waterways or into the public sewage system without being treated to remove the harmful substances contained in those residues.

The liquid residues generated in photographic processes and requiring treatment are in particular developing, fixing, bleaching, bleach fixing, stopping, interrupting and attenuating baths, and in some cases rinsing waters.

The harmful components in the residues to be removed are in particular metals such as silver and iron, compounds containing sulfur such as sulfites and thiosulfates, and also ammonium, complexing agents and reducing aromatic organic compounds such as hydroquinone, aminophenols and phenylene diamines.

The CSB values of the liquid residues to be treated can exceed 100,000 g/m³ and the BSB₅ values can be up to 50,000 g/m³.

The previously known processes for treating liquid residues from photographic processes, that can be encountered in - for example - doctors' surgeries, studios, radar and aircraft monitoring facilities, printing companies, photographic labs, hospitals, state photographic bodies, reproduction companies, PCB manufacturers etc., are generally based on desilvering the residue electrolytically, precipitating residual silver and other heavy metals using precipitating agents, such as H₂S or Na₂S, oxidizing sulfite and thiosulfate, precipitating the sulfate generated as calcium sulfate, and stripping the ammonium nitrogen in the form of ammonia.

A survey of wet-chemical treatment processes used to date for the purpose of treating liquid residues from photographic processes is provided in a working paper of the Baden-Württemberg State Ministry for Food, Agriculture and Forestry dated May 1986.

In this working paper, atmospheric oxygen and hydrogen peroxide are given as oxidization agents for the oxidization of sulfite and thiosulfate to sulfate and for the oxidization of organic harmful substances, such as hydroquinone in desilvered residues.

Ozone is known as a further oxidization agent, for example from the publication of the Society of Photographic Scientists and Engineers, Vol. 14, No. 4, June-July 1972, and Vol. 14, No. 5, August-September 1972, and from a work by T.W. Bober and T.J. Dagon published in the Journal WPCF, Vol. 47, No. 8, 1975, p. 2114-219.

Although a large degree of harmful substance reduction can be achieved with the previously known and applied processes, the requirements placed on harmful substance reduction in the wake of the increasing environmental awareness of the public are increasing too. This means that the legally permitted limit values for the individual harmful substances in the liquid residues are steadily being reduced by the authorities.

There is therefore a need for a process permitting liquid residues from photographic processes, e.g. photochemical wastes, to be treated with the maximum possible effectiveness.

A process is known from DE-OS 39 21 436 that comprises the following process steps:
1. transfer of continuously or discontinuously generated waste water into a storage tank;
2. ancillary biological treatment for preliminary decomposition of substances capable of reaction here;
3. oxygen aeration using air or another oxygen-containing gas for the easily oxidizable components of the waste water;
4. ozone addition for sufficient residual oxidization of the hard-to-decompose constituents with simultaneous pH value control in two or more reactor stages; and
5. catalytic post-treatment by chemical and/or photochemical catalyzing OH radical reaction.

The core of this process is a combination of biological treatment and two oxidization stages. The catalytic post-treatment by chemical and/or photochemical catalyzing OH radical reaction of the process stage 5 is not described in further detail in DE-OS 39 21 436.

A process and devices are known from EP 0 472 705 and DE 691 00 619 T2 for treatment of liquid residues from photographic processes intended to achieve the following in particular:
(a) reduction of the CBS value by preferably more than 90 %;
(b) as complete an oxidization as possible of sulfite and thiosulfate to sulfate;
(c) as complete a destruction as possible of complexing agents, e.g. (NH₄)FeEDTA, EDTA and PDTA, and of complexes, e.g. (Fe(CN)₆)⁴;
(d) an effective reduction of the ammonium content;
(e) as complete an elimination as possible of the iron content and
(f) as complete an elimination as possible of the reaction products detectable by an AOX (absorbable organic halogenide compound) determination process.

The process should be versatile to use, i.e. permit the treatment of a wide variety of liquid residues from photographic processes, for example of used/exhausted X-ray and repro developers, fixing baths, film and paper developing baths, bleach fixing baths and the like.

The known process is characterized in that the residues to be processed are:
(a) subjected to oxygen oxidization,
(b) subjected to ozone oxidization,
(c) where necessary, halogenide ions are removed from the oxidized residue,
(d) the residues largely freed of halogenide ions are where necessary subjected to an anodic post-oxidization, and to
(e) cathodic reduction, then
(f) neutralized and finally
(g) freed by filtration from precipitated solids.

The known process according to EP 0 472 705 and DE 691 00 619 T2 permits both the treatment of diluted residues, i.e. residues that after being generated in operation can be diluted to about 10 to 20 times their original volume by wash water or mains water, and also of concentrated aqueous residues such as occur in operation.

The drawback of the known process is however that it is comparatively time-consuming and expensive for achieving optimum results, and that in particular the biologically non-degradable complexing agents such as EDTA and PDTA cannot be optimally decomposed.

The object underlying the present invention was therefore to further improve the process known from EP 0 472 705 and DE 691 00 619 T2, with particular consideration of as complete a decomposition as possible of the complexing agents present in the residues to be treated.

It was found that the object set can be attained using a process and a device as characterized in the claims.

Accordingly, the subject of the invention is a process for treating liquid residues from photographic processes in which the residues, where necessary after dilution, are oxidized step by step with oxygen and ozone, and precipitated solids from the oxidized residues are separated by filtration after pH value setting and addition of auxiliary substances, characterized in that the residues to be treated are subjected before the ozone treatment to three-stage oxidization, comprising the stages:
(a) oxygen oxidization,
(b) oxygen-supported mild anodic oxidization and
(c) further complete anodic oxidization with current intensities higher than in (b).

Advantageous embodiments of the process are shown in the sub-claims.

The subject of the invention is furthermore a device as characterized in Claim 23.

The treatment facility can furthermore be supplied with concentrated and diluted aqueous residues representing mixtures from a wide variety of baths, e.g. mixtures from the residues of thiosulfate-free baths such as developing baths, and thiosulfate-containing baths such as fixing and bleach fixing baths. It may however also be advantageous to optimize the process by supplying the treatment facility with thiosulfate-containing residues separately from those residues free or largely free of thiosulfate, and subjecting only the thiosulfate-containing residues to anodic oxidizations before passing them on to ozone oxidization.

In accordance with an advantageous embodiment of the invention, the procedure is such that residues free or largely free of thiosulfate on the one hand and residues containing thiosulfate on the other hand are subjected separately from one another to oxygen oxidization according to stage (a) and that the residues containing thiosulfate are oxidized according to stages (b) and (c) before combining the two differently treated residues, which are then subjected to ozone oxidization according to stage (d).

Characteristic for the process of the invention is a three-stage oxidization with the stages (a), (b) and (c), described in detail below. It was found that the object set can be attained by ensuring in stage (a) that the concentration of dissolved oxygen is as high as possible and by performing the anodic oxidization in two stages (b) and (c) under different conditions. In stage (b) the anodic oxidization takes place under "mild" conditions. This means an anodic oxidization with comparatively low current intensities of preferably below 50 A, advantageously from 10 to 20 A, for example. It has become evident that a high oxygen load into thiosulfate-containing solutions results in an effective oxidization at low current intensities of the stated magnitude without substantial generation of elementary sulfur, such that a difficult sulfur separation can be dispensed with. In addition, a very high current yield is achieved. By contrast, the further anodic oxidization following stage (b) takes place with comparatively high current intensities of more than 50 A, in particular 100 to 200 A. In accordance with a particularly advantageous embodiment of the invention, electrolysis cells with a special anode material are used. By a "complete" anodic oxidization it is meant that all organic constituents, in particular also the harmful complexing agents EDTA and PDTA, are decomposed almost completely, i.e. mineralized, so that all organic carbon is present in the form of carbonate.

The electrolysis cells used in stage (c) in accordance with a particularly advantageous embodiment of the invention have special steel cathodes, in particular special steel grilles, and silicon disks with diamond coating as anodes.

This type of electrolysis cell usable in accordance with the invention is described in, for example, US-PS 5,399,247 entitled "Method of electrolysis employing a doped diamond anode to oxidize solutes in waste water".

In the following, the individual process stages are described in detail:

### (a) oxygen oxidization

The oxygen oxidization (aeration) serves to oxidize the comparatively easy-to-oxidize harmful substances, in particular sulfite. The oxygen oxidization with air as the oxygen carrier can be achieved by blowing air into the residues to be treated. It has become clear that the air distribution is of great importance. The air is loaded in a particularly advantageous manner using the suction jet principle. The progress of oxygen oxidization can be traced by, for example, continuous determination of the sulfite content. It has proved advantageous for the residues to be treated with air or with another oxygen-containing gas in stage (a) until 80 or 90 % of the sulfite originally present has oxidized into sulfate.

It is important for the oxygen oxidization to dissolve as much oxygen as possible into the residues to be treated. As a result, all processes are suitable using which high oxygen concentrations are possible. For example the suction jet principle in particular has proved superior for air/oxygen loading compared to the conventionally used compressors with gas distribution system.

### (b) oxygen-supported mild anodic oxidization

This anodic oxidization, which takes place in one or more electrolysis cells, is used for completion of sulfite oxidization and thiosulfate oxidization, combined with a reduction of the CSB value.

The oxidization potential of the oxygen is not sufficient for effective oxidization of the thiosulfate, so the oxidization process during oxygen oxidization is not as required.

It has however become clear that thiosulfate can be oxidized by anodic oxidization using high current intensities. However, this generates a large amount of unwelcome elementary sulfur.

It has now been found that thiosulfate oxidization can be effectively performed even with very low current intensities, provided that as high a oxygen concentration as possible is generated in the thiosulfate-containing partial flow of the residues. This can, as already set forth, be achieved using the suction jet principle. Particularly high oxygen values of up to 30 mg of 0₂/l can be achieved by using the residual oxygen from ozoning.

A "mild" anodic oxidization must therefore be understood as oxidization using low current intensities. Current intensities of 10 - 20 A can be advantageously used instead of the 100 - 200 A possible.

Known electrolysis cells with corrosion-resistant electrodes can be used for anodic oxidization. In accordance with a particularly advantageous embodiment of the invention, electrolysis cells are used with an anode material of titanium coated with noble-metal oxides (e.g. of platinum, rhodium and iridium and certain combinations thereof), which is particularly corrosion-resistant. Cells of this type are commercially available, for example under the designation enViro-Cell® from the company of the same name. In the case of the tests described later, modified cells with the designation enViro-Cell® were used, i.e. the membrane was removed and a special steel cylinder inserted as the cathode, on the surface of which a thin polyethylene film was loosely attached. In this way, thiosulfate in residues can be oxidized particularly quickly and effectively with slightly acid pH value, without this resulting in noteworthy formation of elementary sulfur.

### (c) complete anodic oxidization

This process stage differs from the process stage (b) primarily in the use of higher current intensities. It has proved advantageous in the case of process stage (c) to use current intensities that are 10 to 20 times higher, and preferably 20 times higher, than the current intensity used in the process stage (b). Although in principle the same or similar electrolysis cells can be used as in stage (b), electrolysis cells with a special anode material are used in accordance with a particularly preferred embodiment of the invention for implementation of the process stage (c). Advantageously, the anodes used comprise silicon disks with a diamond coating, these anodes in turn being advantageously combined with special steel cathodes, in particular cathodes made from a special steel grille. Electrolysis cells of this type are described in, for example, US-PS 5,399,247 entitled "Method of electrolysis employing a doped diamond anode to oxidize solutes in waste water".

The use of such electrolysis cells for anodic oxidization permits a particularly effective oxidization of all organic constituents present, in particular the complexing agents. The number of electrolysis cells needed depends first and foremost on the concentration of complexing agents present.

### (d) ozone oxidization

The oxidization potential of the oxygen is not sufficient for oxidizing many of the compounds present in the liquid residues to be treated and which are to be removed. The organic developer compounds in particular cannot be oxidized in the manner necessary by oxygen oxidization.

It has become clear that the compounds not yet oxidized in stage (a) can be effectively oxidized by an oxidization using ozone. This applies in particular for the various organic compounds present, mainly the developing substances such as hydroquinone, p-phenylene diamines etc.

It has proved useful to continue the ozone treatment until the CSB value of the residues has been reduced by 60 to 70 %.

The ozone treatment can be performed by blowing an oxygen/ozone mixture produced by a standard ozone generator into the residues to be treated. The ozone generator can be fed with pure oxygen from liquid oxygen and/or with compressed air and residual gases generated during ozone oxidization.

In accordance with an advantageous embodiment of the invention, the ozone treatment is enhanced by the addition of H₂O₂ in order to achieve the shortest possible treatment time.

### (e) separation of solids

The residues subject to ozone treatment are alkaline. They are mixed with the electrolytically oxidized iron-containing residues.

The precipitation of the solids takes place in a manner known per se by adding alkaline-reacting substances, such as NaOH or Na₂CO₃, or if necessary lime milk, where necessary with the assistance of auxiliary substances.

The sludges precipitated in stage (e) were filtered out and passed on for solids disposal. The waste water freed of precipitation products can be discharged into the public sewage system.

### Drawing

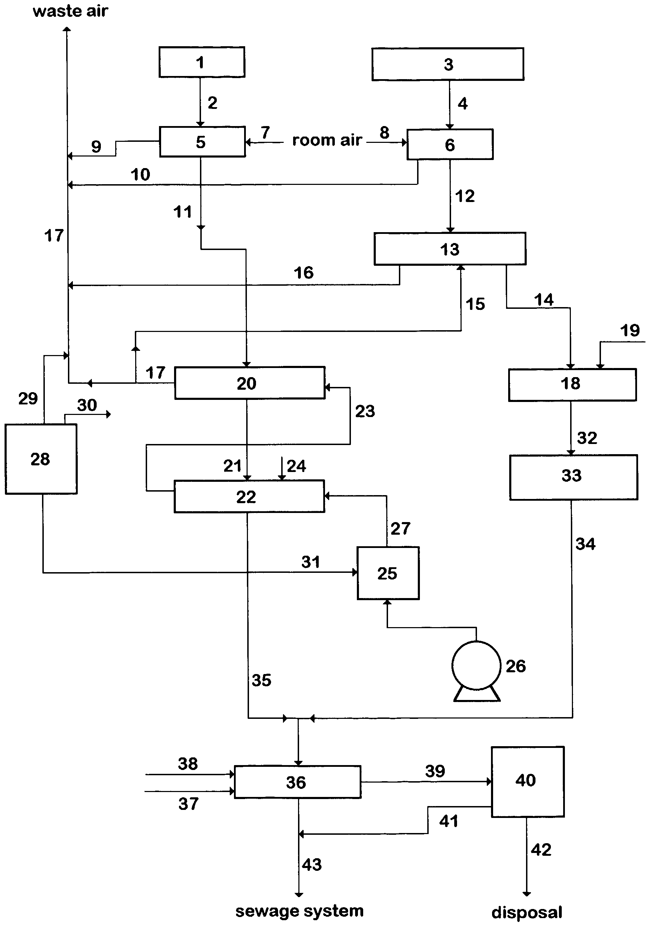

The drawing is intended for more detailed explanation of the invention. The sequence of individual process steps is shown in diagrammatic form during the treatment of separately collected thiosulfate-containing and thiosulfate-free undiluted residues.

As the drawing shows, the thiosulfate-free residues from photographic processes collected in the collecting tank 1 are passed via the line 2 to the tank 5, in which the oxygen oxidization is performed, for example by blowing in air or loading using a suction jet of air supplied via line 7.

The thiosulfate-holding liquid residues from photographic processes are passed from the collecting tank 3 via the line 4 to the tank 6 in which the oxygen oxidization takes place, for example by blowing in air or preferably by loading using a suction jet of air supplied via line 8.

Lines 9 and 10 are for waste air discharge.

After completed oxygen oxidization, the thiosulfate-containing air-oxidized residues are passed via the line 12 into the electrolysis system 13, which comprises a tank with pH value control, a pump transfer system, and one or more electrolysis cells. Several electrolysis cells can be connected up in parallel or in series. With one or more suction jets, the oxygen in the waste air 17 from ozone oxidization is passed to the electrolysis system 13 via the line 15. The electrolysis system 13 is connected via the line 16 to the waste air system 17.

After completion of oxygen oxidization of the thiosulfate-free residues, the latter are passed via the line 11 to the tank 20 and there subjected to pre-ozoning with the waste air flow 23 from the tank 22, which contains oxygen and residual ozone. The pre-ozoned waste water is passed via the line 21 to the tank 22 and hence subjected to the ozone treatment proper. Instead of two ozone treatment tanks, several can also be used as necessary.

The ozone required is produced in the ozone generator 25 in the pure oxygen flow obtained from the liquid oxygen 26 and passed via the line 27 in the form of an ozone/oxygen mixture into the tank 22 from underneath and there brought into as intensive a contact as possible with the waste water. If several tanks are connected up one behind the other, the oxygen mixture in each tank is passed from underneath to the waste water or the waste air of a tank is passed from underneath to the previous tank on the cascade principle.

Instead of producing ozone from pure oxygen, it is also possible to generate it from enriched oxygen from normal air, or directly from normal air.

For enhancing the effect of the oxidization with ozone, hydrogen peroxide is added steadily via the line 24.

Ozoning normally takes place under weakly alkaline conditions, with constant pH value setting using caustic soda solution.

Ozone monitoring of the waste air and the room air via the lines 29, 30 and 31 (when the ozone generator is separately disposed) can advantageously be achieved using an ozone monitoring device 28 that switches off the ozone generator 25 when a certain ozone concentration value is exceeded.

After completing electrolytic oxidization of the thiosulfate-containing residues, the latter are passed via the line 14 to the tank 18. Here caustic soda solution is added via the line 19, and a pH value of 12 is set. If necessary dilution with water takes place.

The strongly alkaline partial flow is passed via the line 32 to the electrolysis system 33, which comprises a tank, preferably several electrolysis cells, a pump transfer system, and a cooling system.

Hydrogen peroxide can be advantageously added, as this accelerates the decomposition of the constituents.

After completion of electrolytic oxidization, the residues are passed via the line 34 to the tank 36, together with the residues from the ozoning tank 22, which are supplied via the line 35.

In the tank 36, a pH value of 4 is set by adding sulfuric acid via the line 37, then lime milk and water glass are added in a certain ratio, manually or automatically, and then a pH value of 8 is set using caustic soda solution via the line 38.

With a pH value of 8, a flocculation agent is best added for enlarging the iron hydroxide flakes. After settling of the solids in the tank 36, the clear liquid above it can be drained off via a control tank (for sampling purposes) via line 43 into the public sewage system.

The residues, which comprise in particular iron hydroxide, are passed to the filter station 40 via the line 39. Here the liquid portion is passed via the lines 41 and 43 to the public sewage system. The solid residue of the filter station is passed via mobile collecting tanks for disposal via line 42.

The residues are conveyed through the system by pumps, which have been omitted from the drawing for the sake of clarity.

The following example is intended to explain the invention in greater detail.

### Example

In a treatment facility as shown in the drawing, exhausted developing solution (part residue A) and exhausted but desilvered fixing baths, bleach fixing baths and bleaching baths from a photographic laboratory, diluted with about 15 % water (part-residue B), were treated.

The ratio of the part-residues A and B was about 2:1. The part-residue A contained a maximum of 11 g/l of sulfite, the CSB value was about 35 of O₂/l. The sulfite content of part-residue B was about 3.5 g/l and the CSB content around 65 g of O₂/l.

In the aeration stations 5 and 6, the part-residues A and B were treated with air oxygen long and intensively according to the suction jet principle until the sulfite content of the part-residue A was only about 0.75 g/l and the CSB value had fallen to about 32.5 g of O₂/l. In the case of the part-residue B, the sulfite content was reduced to practically zero. The thiosulfate content of the part-residue B was after aeration about 14 g/l and the CSB value approx. 61.5 g of O₂/l.

The part-residue B was then subjected in the electrolysis station 13 to an anodic oxidization intensified by oxygen loading. In this example, the electrolysis station 13 comprised 12 cells that differed in their design as follows from commercially available cells of the enViro Cell ER/1/TC-KF type (made by Deutsche Carbone): each cell comprised a round cell with internal anode and external cathode. The anode consisted of a titanium expanded metal cylinder with noble metal oxide coating, as already described. The cathode comprised a special steel cylinder close up against the inner cell wall. Between the anode and the cathode a porous polyethylene film contacting the cathode surface was inserted. Unlike a genuine membrane, the film was open at the bottom of the cell, hence forming a kind of "pseudo-membrane". This did not cause any real separation of the anode and cathode liquid. The flow of anodically oxidized liquid directly onto the cathode was however largely prevented in this way and hence also the immediate reduction as the back-reaction.

By the modification of the electrolysis cells compared with those of the commercially available type enViro Cell ER/1/TC-KF (made by Deutsche Carbone), the efficiency of the electrolysis station compared with the use of commercially available cells was able to be adapted to the problem of rapid thiosulfate oxidization without the formation of sulfur.

The cells were used in groups each comprising 4 cells arranged in parallel, each group with a pump transfer system and suction jet ensuring the loading of oxygen from the ozone reactor waste air. Each cell was operated with 10 A/2. 1 V. The pH value was kept at about 4.

After leaving the electrolysis station 13, the sulfite content of the part-residue B was practically zero and the thiosulfate content was less than 1 g/l. The CSB content was about 53.5 g of O₂/l.

The part-residue B was then set in the tank 18 with caustic soda solution (30 %) to a pH value of 12, with the iron contained in the residue B being converted into hydroxide. Then the part-residue B containing the iron hydroxide was supplied to the electrolysis station 33, in which an almost complete anodic oxidization of the organic constituents took place.

The electrolysis station comprised several cells with special steel grille cathodes and diamond-coated silicon anodes each having their own current supply. Electrolysis took place with 35 A/6 V per cell. In the pump transfer system, a cooling facility was provided to keep the temperature of the liquid at a constant 30°C.

Electrolysis cells of the type used with special steel grille cathodes and diamond-coated silicon anodes are known from US-PS 5,399,247 entitled "Method of electrolysis employing a doped diamond anode to oxidize solutes in waste water".

After leaving the electrolysis station 33, the EDTA/PDTA content was less than 20 mg/l and the CSB value around 300 mg/l of O₂/l.

The part-residue A from the aeration station 5 was transferred to the ozoning tanks 20 and 22 and subjected to ozone oxidization until the sulfite/thiosulfate content had fallen to almost zero and the CSB value had been reduced by 50 %, i.e. to approx. 16 g of O₂/l. The ozone generator 25 used had a capacity of 4 kg of ozone per hour. The H₂O₂ (35 %) was metered in a quantity of 15 liters per hour and the pH value was kept at 8. The residue from the ozoning tank 22 was supplied to the tank 36. The residue B from the electrolysis station 33 was likewise supplied to the tank 36 added after completion of anodic oxidization, as a result of which the two partial flows A and B were combined.

By the addition of sulfuric acid (20 %) via the line 37, the tank content was set to a pH value of 4, to which were added 10 liters of 10 % lime milk per m³ and water glass solution (1 liter per m³). The pH value was then set to 8 using caustic soda solution (30 %) via the line 38, and the flocculation agent Sedipur CF 404 (BASF) was added as a 0.25 % aqueous solution (5 liters per m³). The switch-on tank agitator ensured good mixing of all additives.

After the agitator was switched off, the iron hydroxide was filtered off once settled in the filter station 40. The clear solution above it could be drained off directly.

The liquid residue leaving the filter station was free of sulfite/thiosulfate, had a CSB value of 10 g of O₂/l and contained less than 10 mg/l of EDTA/PDTA. The iron content was less than 5 mg/l and the silver content less than 0.5 mg/l. Water-containing iron hydroxide was separated in the filter station and disposed of as waste.

## Claims

1. A process for the treatment of liquid residues f photographic processes, in which said residues are, where necessary after dilution, oxidized in stages with oxygen and ozone and where precipitated solids are, after pH value setting and the addition of auxiliary substances, separated by filtration from the oxidized residues, characterized in that the residues to be treated are subjected to a three-stage oxidization process having the stages:
(a) oxygen oxidization,
(b) oxygen-supported mild anodic oxidization and
(c) a further complete anodic oxidization with current intensities higher than in (b), and in that said residues are subjected
(d) in a manner known per se to an ozone treatment and in stage
(e) the precipitated solids are separated in a manner known per se.

2. A process according to Claim 1, characterized in that the residues to be treated are subjected to the process steps a), d) and e) without thiosulfate in undiluted form.

3. A process according to Claim 1, characterized in that residues containing thiosulfate and complexing agents are used in moderately diluted form.

4. A process according to Claim 4, characterized in that residues without thiosulfate on the one hand and residues containing thiosulfate and complexing agents on the other hand are subjected separately from one another to oxygen oxidization according to stage (a) and after ozone oxidization of the thiosulfate-free residues by stage (d) on the one hand and after anodic oxidizations (b) and (c) of said residues containing thiosulfate and complexing agents on the other hand said two differently treated residues are combined and subjected to solids separation according to stage (e).

5. A process according to Claims 1 to 4, characterized in that the oxygen oxidization according to stage (a) is performed in two or more part-stages.

6. A process according to Claims 1 to 5, characterized in that the residues are treated in stage (a) with air or another gas containing oxygen until at least 90 % of the oxygen originally present has been oxidized to sulfate.

7. A process according to Claim 5, characterized in that the oxygen oxidization according to stage (a) is performed in the first part-stages with room air or with other gases containing oxygen using the suction jet principle.

8. A process according to Claim 1, characterized in that the residues containing thiosulfate and complexing agents are subjected to anodic oxidization until the thiosulfate content has been reduced by 95 %.

9. A process according to Claim 8, characterized in that the anodic oxidization is performed with very low current intensities.

10. A process according to Claim 8, characterized in that the anodic oxidization is performed with low current intensities and with a high concentration of dissolved oxygen in the residue.

11. A process according to Claim 10, characterized in that the high dissolved oxygen content in the residue is achieved by loading oxygen using suction jets.

12. A process according to Claim 11, characterized in that oxygen loading using suction jets is achieved by using the ozone reactor waste air.

13. A process according to Claim 1, characterized in that the thiosulfate-free residues from stage (a) are treated with ozone until the CSB value has been reduced by at least 50 %.

14. A process according to Claim 13, characterized in that ozone oxidization (d) is supported by H₂O₂.

15. A process according to Claims 1 to 14, characterized in that the residual oxygen generated during ozone oxidization in stage (d) is used for anodic oxidization (b).

16. A process according to Claim 14, characterized in that H₂O₂ addition during ozoning is selected large enough to ensure as short an ozoning time as possible.

17. A process according to Claim 1, characterized in that stage (c) for residues containing thiosulfate and complexing agents is performed in at least one electrolysis cell.

18. A process according to Claim 17, characterized in that the residues subjected to stage (b) are set using alkali to a high pH value and a high solids precipitation is achieved.

19. A process according to Claim 17, characterized in that electrolysis cells are used that have special steel grilles as cathodes and silicon disks with diamond coating as anodes.

20. A process according to Claim 17, characterized in that the residues are passed through a circuit with cooling by the electrolysis cells.

21. A process according to Claim 1, characterized in that the residues are subjected in stage (c) to anodic oxidization until the concentration of the complexing agents EDTA/PDTA is less than 20 mg/l.

22. A process according to Claims 1 to 21, characterized in that the ozone required for ozone oxidization in stage (d) is generated in an ozone generator fed with pure oxygen from liquid oxygen or compressed air.

23. A device for performing the process according to Claims 1 to 22 having at least one aeration station (5) for oxygen oxidization of the thiosulfate-free liquid residues, at least one aeration station (6) for oxygen oxidization of the liquid residues containing thiosulfate and complexing agents, at least one electrolysis station (13) for mild anodic oxidization, at least one station (18) for pH value increase, at least one electrolysis station (33) for complete anodic oxidization at least two ozoning stations in series (20/22) for ozone oxidization of the thiosulfate-free residues oxidized in said aeration station (5), and a station for precipitation of iron hydroxide (36) with an iron hydroxide filtration station (40) for removing precipitated solids from the two combined pretreated residue flows.
